# EUROPÄISCHE PATENTSCHRIFT

(11) **EP 4 303 816 B1**
(45) Veröffentlichungstag und Bekanntmachung des Hinweises auf die Patenterteilung: **04.09.2024**
(21) Anmeldenummer: 23169587.5
(22) Anmeldetag: 24.04.2023
(51) Int. Cl.: G06T 7/11, G06T 7/62

(54) **VERFAHREN UND VORRICHTUNG ZUR ERFASSUNG VON STAMMDATEN EINES OBJEKTS**
METHOD AND DEVICE FOR ACQUIRING MASTER DATA OF OBJECT
PROCÉDÉ ET DISPOSITIF DE DÉTECTION DE DONNÉES DE SOUCHE D'UN OBJET

(30) Priorität: 25.05.2022 DE 102022113259
(43) Veröffentlichungstag der Anmeldung: 10.01.2024
(73) Patentinhaber: SICK AG, 79183 Waldkirch (DE)
(72) Erfinder: Multer, Christian, 79115 Freiburg (DE)

(56) Entgegenhaltungen:
- EP-A1- 2 722 656
- CN-A- 110 308 817
- US-A1- 2017 358 098
- LEE DONG-SEOK ET AL: "Virtual Touch Sensor Using a Depth Camera", SENSORS, vol. 19, no. 4, 20 February 2019 (2019-02-20), pages 885, XP055876737, DOI: 10.3390/s19040885

## Beschreibung

Die Erfindung betrifft ein Verfahren und eine Vorrichtung zur Erfassung von Stammdaten eines Objekts.

Die Stammdaten eines Objekts umfassen in erster Linie das Volumen und das Gewicht. Zur Erfassung dieser Daten werden nach dem Stand der Technik Objekte auf eine Waage abgelegt und mit einem Volumenerfassungssystem vermessen. Um korrekte Stammdaten zu erfassen, musste bisher das Objekt frei und ohne Fremdobjekt in der Umgebung auf einer Waage liegen, auf der es dann auch mit dem optischen Volumenerfassungssystem automatisch vermessen wird. Sind Fremdobjekte, wie beispielsweise Hände und Arme von Personal, das die Objekte auf die Waage legt, im Sichtfeld der Kamera vorhanden, kann das Volumenerfassungssystem das Objekt nicht mehr korrekt erfassen. Dies gilt ebenfalls für den Wiegeprozess, bei dem das Objekt auf der Waage nicht berührt werden darf, um sicherzustellen, dass das Gewicht nicht verfälscht ist.

Einrichtungen und Verfahren zur Bestimmung der Abmessungen eines Objekts mithilfe eines Entfernungsbildes sind in der Patentanmeldung EP 2 722 656 A1 beschrieben, die am 23. April 2014 veröffentlicht wurde. Das Objektanalysesystem ist in der Lage, die Bewegungen der Hände des Benutzers zu verfolgen und die Abmessungen des Objekts auf der Grundlage der Positionierung der Hände zu berechnen.

Von der Firma Metrilus GmbH ist ein solches Stammdatenerfassungssystem unter der Bezeichnung S110/120 bekannt. Dieses System umfasst eine Waage zum Erfassen des Gewichts und eine 3D-Kamera zur Bestimmung des Volumens sowie einen Codeleser. Die 3D-Kamera erkennt das Objekt auf der Waage und startet die Stammdatenerfassung, wenn mit dem Codeleser das Objekt identifiziert wird und keine Fremdobjekte vom Volumenerfassungssystem erfasst werden.

Um ein Objekt messen zu können, muss es also innerhalb eines definierten Bereichs freistellbar sein. "Freistellbar" bedeutet in diesem Fall, dass es keine Berührungen mit anderen Objekten geben darf. Deshalb ist es allgemein notwendig, den Messbereich während einer Messung komplett frei von Fremdobjekten zu machen. Fremdobjekte sind hier auch z.B. Hände und andere Objekte, die von außerhalb in den Messbereich ragen, ohne das Objekt zu berühren.

Nachteilig hieran ist ein erhöhter Aufwand während der Messung und ein daraus resultierender Geschwindigkeitsnachteil oder auch auftretende Fehlmessungen durch Messung von Fremdobjekten.

Es ist daher eine Aufgabe der Erfindung, ein verbessertes Verfahren und eine neue Vorrichtung zur Erfassung von Stammdaten eines Objekts bereitzustellen, mit denen insbesondere eine schnellere und sichere Erfassung der Stammdaten möglich ist.

Diese Aufgabe wird gelöst durch ein Verfahren mit den Merkmalen des Anspruchs 1 und eine Vorrichtung mit den Merkmalen des Anspruchs 4.

Das erfindungsgemäße Verfahren zur Erfassung von Stammdaten eines Objekts umfasst folgende Schritte:
- Ablegen des Objekts auf einer Waage,
- Ermittlung eines Startzeitpunkts zur Aufnahme der Stammdaten durch:
- Aufnehmen eines Tiefenwerte aufweisenden Bildes des Objekts mit einer Kamera,
- Ermitteln von zusammenhängenden Regionen im Bild, die dann erste temporäre Objekte bilden,
- Klassifizieren der ersten temporären Objekte in eine valide und eine invalide Klasse, wobei alle ersten temporären Objekte, die innerhalb des Bildes ohne Berührung des Bildrandes liegen, in die valide Klasse einsortiert werden und erste temporäre Objekte mit Randberührung in die invalide Klasse,
- Analysieren der ersten temporären Objekte in der invaliden Klasse durch Auswertung der Tiefenwerte und Bilden neuer Unterregionen mit Tiefenwerten jenseits einer Tiefenwertschwelle,
- Untersuchen der Unterregionen auf zusammenhängende Bereiche, wobei diese zusammenhängenden Bereiche zweite temporäre Objekte bilden,
- Verschieben der zweiten temporären Objekte in die valide Klasse, wenn diese nicht den Bildrand berühren,
- Finden von Überdeckungen der temporären Objekte in der validen Klasse mit den in der invaliden Klasse verbliebenen temporären Objekten, wobei die Überdeckung einen Überdeckungsschwellwert überschreiten muss,
- bei Überdeckung, Verschieben der betreffenden temporären Objekte aus der validen Klasse in die invalide Klasse,
- Definieren der temporären Objekte in der validen Klasse als zu vermessendes Objekt,
- wenn kein Objekt in der validen Klasse ist, Ausgeben eines Fehlersignals, sonst
- Starten der Volumenerfassung des Objekts nach dem so ermittelten Startzeitpunkt,
- Aufnehmen der Stammdaten,
- Speichern der aufgenommenen Stammdaten,
- Ausgeben der Stammdaten.

Durch die Klassifizierung von Fremdobjekten in zulässige und unzulässige Fremdobjekte ist jetzt die Möglichkeit geschaffen, auch eine Datenerfassung vorzunehmen, wenn Fremdobjekte, nämlich zulässige Fremdobjekte im Sichtbereich der Kamera sich befinden. Dadurch wird der Durchsatz erhöht, denn die Datenerfassung kann bereits starten, wenn die Hände das auf der Waage abgelegte Objekt loslassen aber noch im Sichtfeld der Kamera sind.

Durch die Klassifizierung der Fremdobjekte ist auch eine sicherere Datenerfassung möglich. Auch eine mögliche Fehleranalyse ist dadurch verbessert.

Eine vorteilhafte Ausgestaltung des erfindungsgemäßen Verfahrens besteht darin, bei der Analyse der ersten temporären Objekte für die Auswertung der Tiefenwerte und Bilden neuer Unterregionen mit Tiefenwerten jenseits einer Tiefenwertschwelle Tiefenwerthistogramme aufzunehmen und auszuwerten. Das erleichtert die Klassifizierung der Fremdobjekte in zulässige und unzulässige Fremdobjekte.

Da es in einer 3D-Kamera immer mal wieder vorkommt, dass in Regionen des Bildes Tiefenwerte fehlen und bei Vorhandensein solcher Regionen keine sinnvolle Auswertung stattfinden kann, umfasst in Weiterbildung der Erfindung das Suchen nach Überdeckungen auch die Suche nach Überdeckungen der temporären Objekte in der validen Klasse mit den Regionen mit fehlenden Tiefenwerten. Bei Feststellen einer Überdeckung wird das betreffende temporäre Objekt aus der validen Klasse in die invalide Klasse verschoben.

Sinnvollerweise erfolgt in Weiterbildung der Erfindung die Ausgabe eines Fehlersignals, wenn am Ende der Auswertung kein Objekt in der validen Klasse ist, was bedeutet, dass eine Stammdatenerfassung nicht möglich ist.

Die Aufgabe wird ebenso gelöst durch eine erfindungsgemäße Vorrichtung zur Erfassung von Stammdaten eines Objekts, die folgenden Merkmale aufweist:
- eine Waage,
- eine Kamera zur Aufnahme eines Bildes des Objekts,
- eine Auswerteeinheit mit einer Volumenbestimmungseinheit zur Bestimmung des Volumens des Objekts,
- eine Startereinheit, die selbsttätig einen Startzeitpunkt ermittelt zur Aufnahme der das Objektvolumen betreffenden Stammdaten, wenn das Objekt auf der Waage abgelegt ist,
- einen Speicher zur Speicherung der aufgenommenen Stammdaten,
- eine Ausgabeeinheit zur Ausgabe der Stammdaten,
   wobei
- die Startereinheit ausgebildet ist, den Startzeitpunkt aus dem aufgenommenen Bild der Kamera zu ermitteln und die Startereinheit dazu eine Bildauswertungseinheit aufweist und die Bildauswertungseinheit ausgebildet ist, eine Objektklassifizierung durchzuführen, mit der neben dem Objekt auch Fremdobjekte als zulässige oder unzulässige Fremdobjekte erkannt werden.

In einer ersten Weiterbildung ist die Startereinheit ausgebildet, den Startzeitpunkt möglichst früh auszugeben und bereits dann ausgibt, wenn ein zulässiges Fremdobjekt noch im Bildbereich befindlich ist. Dadurch kann der Durchsatz noch mal erhöht werden.

Für eine einfache Klassifizierung erzeugt die Kamera Tiefenwerte, also ein 3D-Bild wird aufgenommen, denn dann kann die Bildauswerteeinheit bei der Objektklassifizierung die Tiefenwerte berücksichtigen, was die Klassifizierung erleichtert.

In Weiterbildung der Erfindung ist die Auswerteeinheit sinnvollerweise ausgebildet, eine Meldung, also ein Fehlersignal, auszugeben, wenn kein Startzeitpunkt innerhalb einer Wartezeit ermittelt werden konnte. Auf diese Weise kann der Benutzer des Systems schnell erkennen, dass die Stammdaten nicht erfasst wurden.

Im Folgenden wird die Erfindung anhand eines Ausführungsbeispiels unter Bezugnahme auf die Zeichnung im Einzelnen erläutert. In der Zeichnung zeigen:

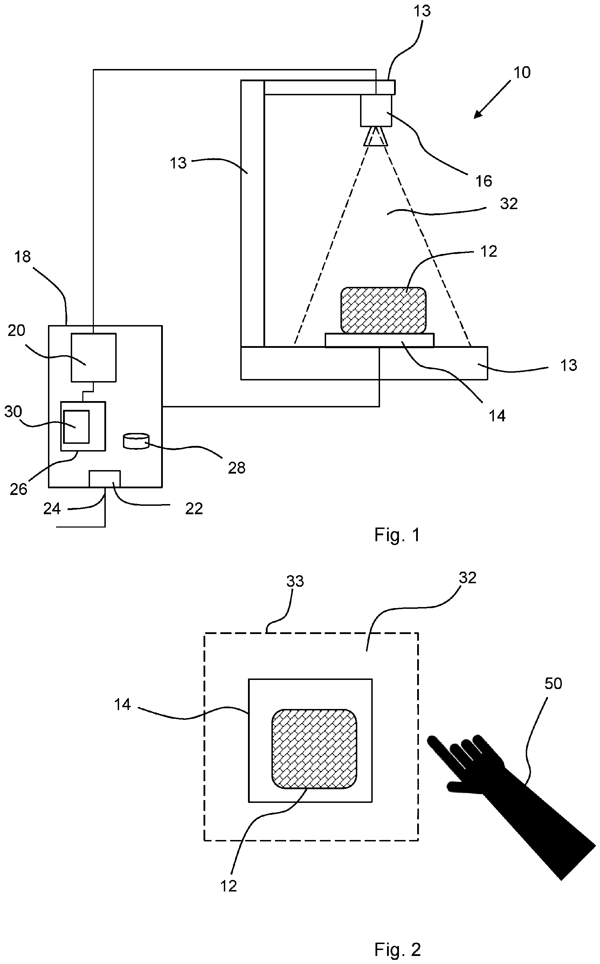

- Fig. 1: eine schematische Darstellung der erfindungsgemäßen Vorrichtung;
- Fig. 2 bis 6: schematische Draufsichten auf das Sichtfeld der Kamera mit jeweils einem Fremdobjekt in unterschiedlicher Position;
- Fig. 7: eine schematische Draufsicht auf das Sichtfeld der Kamera mit Bilddefekten;
- Fig. 8: ein Ablaufdiagramm des erfindungsgemäßen Verfahrens.

Die erfindungsgemäße Vorrichtung 10 dient zur Erfassung von Stammdaten eines Objekts 12. Die Vorrichtung 10 weist neben mechanischen Konstruktionselementen 13 eine Waage 14, eine Kamera 16 zur Aufnahme eines Bildes des Objekts 12 und eine Auswerteeinheit 18 auf. Die Auswerteeinheit 18 weist eine Volumenbestimmungseinheit 20 zur Bestimmung des Volumens des Objekts 12 auf. Mit der Waage 14 wird das Gewicht des Objekts 12 erfasst und mit der Volumenbestimmungseinheit 20 das Volumen. Die so ermittelten Daten können letztendlich über eine Ausgabeeinheit 22 als Stammdaten oder zumindest als Teil von Stammdaten an einem Ausgang 24 ausgegeben werden. Zur Speicherung oder Zwischenspeicherung der erfassten Stammdaten ist ein Speicher 28 vorgesehen.

Die Auswerteeinheit 18 umfasst weiter eine Startereinheit 26, die selbsttätig einen Startzeitpunkt ermittelt zur Aufnahme und Ermittlung der das Objektvolumen betreffenden Stammdaten, wenn das Objekt 12 im Sichtfeld 32 der Kamera 16 abgelegt ist. Dazu ist die Startereinheit 26 ausgebildet, den Startzeitpunkt aus dem aufgenommenen Bild der Kamera 16 zu ermitteln und weist eine Bildauswertungseinheit 30 auf, wobei die Bildauswertungseinheit 30 ausgebildet ist, eine Objektklassifizierung durchzuführen, mit der neben dem Objekt 12 auch Fremdobjekte 50 als zulässig oder unzulässig klassifiziert werden.

Die Startereinheit 26 ist ausgebildet, den Startzeitpunkt möglichst früh auszugeben und kann diesen bereits dann ausgeben, wenn ein als zulässig klassifiziertes Fremdobjekt 50 noch im Bildbereich 32 der Kamera 16 befindlich ist.

Die Kamera 16 ist als 3D-Kamera ausgebildet, die neben einem 2D-Bild mit Bildrand 33 für jeden Pixel auch Tiefenwerte ermittelt und so insgesamt ein 3D-Bild aufnimmt.

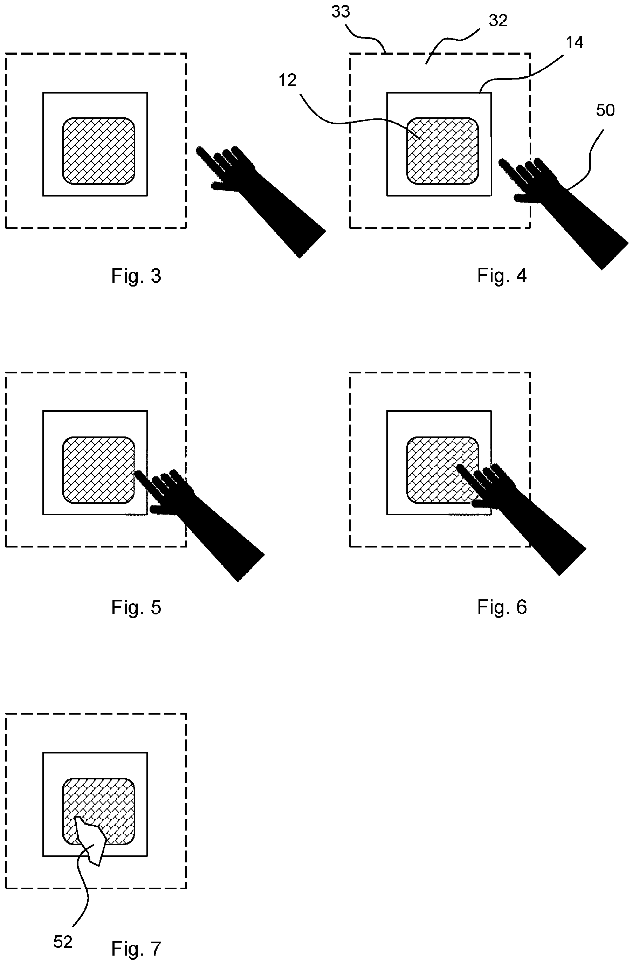

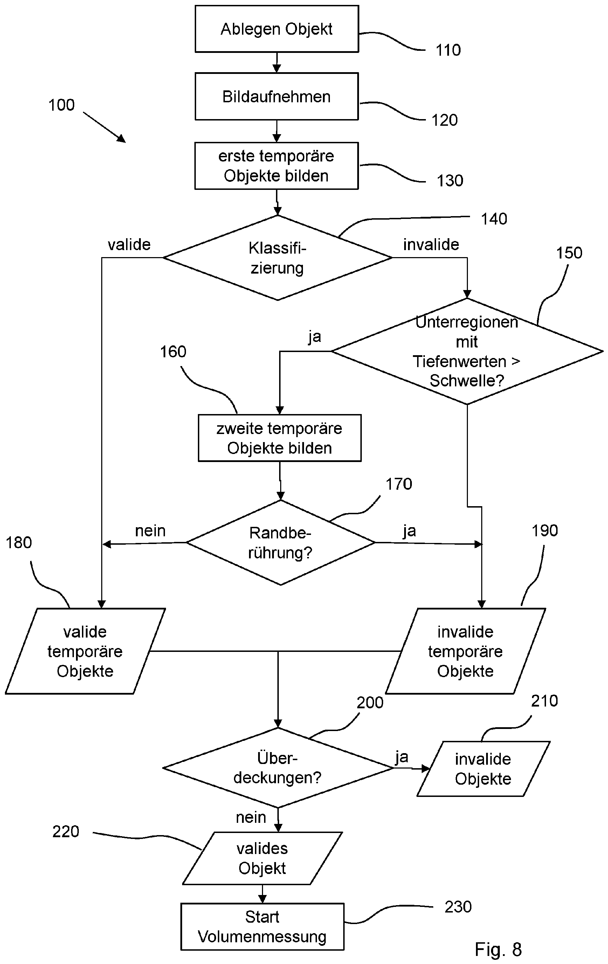

Ein Ablaufdiagramm einer Ausführungsform zumindest eines Teils des erfindungsgemäßen Verfahrens 100 ist in Fig. 8 dargestellt und wird im Folgenden auch unter Bezugnahme auf die Fig. 3 bis 7 erläutert. Die Fig. 3 bis 7 zeigen jeweils eine Draufsicht auf die Waage 14 und ein darauf abgelegtes Objekt 12 aus der Sicht der Kamera 16. In den Figuren ist der Rand 33 des Sichtfelds 32 als gestrichelte Linie ebenfalls dargestellt, der im 2D-Bild der Bildrand 33 ist.

Das Verfahren 100 läuft größtenteils in der Startereinheit 26 ab mit dem Ziel, die Erfassung des Volumens des Objekts 12 und damit die Stammdatenerfassung durch ein Startsignal zu einem Startzeitpunkt zu starten.

In einem ersten Schritt 110 wird das Objekt auf der Waage 14 abgelegt.

Dann wird ein Startzeitpunkt ermittelt, zu dem das Startsignal gegeben werden kann, um die Aufnahme der Stammdaten zu starten. Die Ermittlung des Startzeitpunkts erfolgt durch die folgenden Schritte.

In einem Schritt 120 erfolgt das Aufnehmen eines Tiefenwerte aufweisenden Bildes des Objekts 12 mit der Kamera 16.

In einem Schritt 130 werden aus dem Bild anhand der Tiefenwerte zusammenhängende Regionen im Bild ermittelt. Regionen im Sinne dieses Patents können einzelne Pixel oder Gruppen von Pixeln des Bildes sein. Diese zusammenhängenden Regionen bilden erste temporäre Objekte. In der Fig. 3 zum Beispiel wäre eine solche zusammenhängende Region das Objekt 12. In der Fig. 6 wäre eine zusammenhängende Region die in das Sichtfeld 32 hineinragende Hand mit Arm, also das Fremdobjekte 50 zusammen mit dem durch die Hand teilweise verdeckten Objekt 12. Die gesamte Bildauswertung erfolgt in der Bildauswertungseinheit 30.

In einem nächsten Schritt 140 erfolgt eine Klassifizierung der ersten temporären Objekte in eine valide Klasse und eine invalide Klasse, wobei alle ersten temporären Objekte, die innerhalb des Bildes ohne Berührung des Bildrandes 33 liegen, in die valide Klasse einsortiert werden und erste temporäre Objekte mit Randberührung in die invalide Klasse.

Auf diese Weise wird beispielsweise
- in einer Situation nach Fig. 3 das Objekt 12 in die valide Klasse einsortiert;
- in einer Situation nach Fig. 4 ist das Objekt 12 in die valide Klasse und das Fremdobjekte 50 in die invalide Klasse einsortiert;
- in einer Situation nach Fig. 5 und 6 gibt es jeweils nur ein erstes temporäres Objekt, da das Fremdobjekt 50 das zu vermessende Objekt 12 zumindest berührt und diese beiden dann das erste temporäre Objekt bilden. Dieses erste temporäre Objekt wird in die invalide Klasse einsortiert.

In Fig. 7 ist eine Situation dargestellt, bei der kein Fremdobjekt 50 vorhanden ist, aber ein Bereich 52 im Sichtbereich 32 vorhanden ist, in dem keine Tiefenwerte vorliegen. Diese besondere Fehlersituation wird später noch berücksichtigt.

In einem Schritt 150 werden die ersten temporären Objekte, die in die invalide Klasse einsortiert wurden, analysiert. Dabei werden die Tiefenwerte ausgewertet und geschaut, ob sie jenseits einer Tiefenwertschwelle liegen. Ist das der Fall, dann bilden die Regionen eine neue Unterregion. Dabei werden bevorzugt für die Auswertung der Tiefenwerte und für das Bilden neuer Unterregionen mit Tiefenwerten jenseits einer Tiefenwertschwelle, Tiefenwerthistogramme aufgenommen und in der Auswerteeinheit 18 ausgewertet.

In einem nächsten Schritt werden die Unterregionen daraufhin untersucht, ob sie zusammenhängen und die zusammenhängenden Bereiche bilden dann zweite temporäre Objekte. Im Regelfall entsprechen Peaks im Tiefenwerthistogramm den zweiten temporären Objekten. Dadurch und mit den Tiefenwerthistogrammen erfolgt in den Situationen nach Fig. 5 und 6 somit eine Trennung von Objekt 12 und Fremdobjekt 50 in zwei zweite temporäre Objekte.

In einem nächsten Schritt 170 wird geprüft, ob diese zweiten temporären Objekte den Bildrand 33 berühren. Wenn ein zweites temporäres Objekt den Bildrand 33 nicht berührt, dann wird dieses zweite temporäre Objekt von der invaliden Klasse in die valide Klasse verschoben. Das wäre zum Beispiel das Objekt 12 in Fig. 5.

Bis hierhin hat man in dem erfindungsgemäßen Verfahren also temporäre Objekte gefunden, die entweder in die valide Klasse 180 oder in die invalide Klasse 190 einsortiert sind.

In einem folgenden Schritt 200 wird geprüft, ob es Überdeckungen der temporären Objekte der validen Klasse mit den temporären Objekten, die in der invaliden Klasse verbliebenen sind, gibt. Dabei ist sinnvollerweise eine Überdeckung dann eine Überdeckung, wenn die überbedeckte Fläche ausreichend groß ist, also ein Überdeckungsschwellwert überschritten ist. Die Fig. 6 zeigt eine solche Überdeckung, bei der die Hand eine ausreichend große Fläche des Objekts 12 überdeckt.

Liegt eine Überdeckung vor, werden die betreffenden temporären Objekte, die vorher in der validen Klasse waren (Bezugsziffer 180), aus der validen Klasse in die invalide Klasse (Bezugsziffer 210) verschoben. In der in Fig. 6 gezeigten Situation wird also das Objekt 12 in die invalide Klasse verschoben.

Liegt keine Überdeckung vor, wie dies beispielsweise in den Situationen nach Fig. 4 und 5 für das Objekt 12 der Fall ist, verbleibt das Objekt 12 in der validen Klasse.

Da es in einer 3D-Kamera immer mal wieder vorkommt, dass in Regionen des Bildes Tiefenwerte fehlen, beispielsweise durch defekte Pixel oder Auswertungsfehler und bei Vorhandensein solcher Regionen 52 ohne Tiefenwerte keine sinnvolle Auswertung stattfinden kann, umfasst das Suchen nach Überdeckungen bevorzugt auch die Suche nach Überdeckungen der temporären Objekte in der validen Klasse mit den Regionen 52 mit fehlenden Tiefenwerten. Bei Feststellen einer ausreichend großen Überdeckung wird das betreffende temporäre Objekt aus der validen Klasse in die invalide Klasse verschoben. Eine solche Situation ist in Fig. 7 dargestellt.

Nach diesen Schritten werden in einem Schritt 220 die in der validen Klasse verbliebenen temporären Objekte als zu vermessendes Objekt definiert.

Damit ist der Startzeitpunkt gefunden und es wird ein Startsignal gegeben und danach in einem Schritt 230 die Volumenerfassung des Objekts 12 gestartet (Startzeitpunkt).

Die Volumendaten werden aus den 3D Bildern der Kamera 16 in der Volumenbestimmungseinheit 20 errechnet und bilden ein Teil der Stammdaten, die in einem Speicher 28 gesammelt werden und dann über die Ausgabeeinheit 22 und den Ausgang 24 ausgegeben werden.

Sinnvollerweise erfolgt eine Ausgabe eines Fehlersignals, wenn bei der Ermittlung des Startzeitpunkt kein Objekt 12 in der validen Klasse verbleibt, was bedeutet, dass eine Stammdatenerfassung nicht möglich ist. Dann wird auch kein Startsignal ausgegeben.

## Patentansprüche

1. Verfahren zum Erfassen von Stammdaten eines Objekts (12) mit den Schritten:
- Ablegen des Objekts auf einer Waage (14),
- Ermittlung eines Startzeitpunkts zur Aufnahme der Stammdaten durch:
- Aufnehmen eines Tiefenwerte aufweisenden Bildes des Objekts (12) mit einer Kamera (16),
- Ermitteln von zusammenhängenden Regionen im Bild, die dann erste temporäre Objekte bilden,
- Klassifizieren der ersten temporären Objekte in eine valide und eine invalide Klasse, wobei alle ersten temporären Objekte, die innerhalb des Bildes ohne Berührung des Bildrandes (33) liegen, in die valide Klasse einsortiert werden und erste temporäre Objekte mit Randberührung in die invalide Klasse,
- Analysieren der ersten temporären Objekte in der invaliden Klasse durch Auswertung der Tiefenwerte und Bilden neuer Unterregionen mit Tiefenwerten jenseits einer Tiefenwertschwelle,
- Untersuchen der Unterregionen auf zusammenhängende Bereiche, wobei diese zusammenhängenden Bereiche zweite temporäre Objekte bilden,
- Verschieben der zweiten temporären Objekte in die valide Klasse, wenn diese nicht den Bildrand (33) berühren,
- Finden von Überdeckungen der temporären Objekte in der validen Klasse mit den in der invaliden Klasse verbliebenen temporären Objekten, wobei die Überdeckung einen Überdeckungsschwellwert überschreiten muss,
- bei Überdeckung, Verschieben der betreffenden temporären Objekte aus der validen Klasse in die invalide Klasse,
- Definieren der temporären Objekte in der validen Klasse als zu vermessendes Objekt,
- wenn kein Objekt in der validen Klasse ist, Ausgeben eines Fehlersignals, sonst
- nach dem so ermittelten Startzeitpunkt, Starten der Volumenerfassung des Objekts (12),
- Aufnehmen der Stammdaten,
- Speichern der aufgenommenen Stammdaten,
- Ausgeben der Stammdaten.

2. Verfahren nach Anspruch 1, **dadurch gekennzeichnet, dass** für die Auswertung der Tiefenwerte und Bilden neuer Unterregionen mit Tiefenwerten jenseits einer Tiefenwertschwelle Tiefenwerthistogramme aufgenommen und ausgewertet werden.

3. Verfahren nach einem der vorhergehenden Ansprüche 1 oder 2, **dadurch gekennzeichnet, dass** bei Vorhandensein von Regionen mit fehlenden Tiefenwerten, das Suchen nach Überdeckungen auch die Suche nach Überdeckungen der temporären Objekte in der validen Klasse mit den Regionen mit fehlenden Tiefenwerten umfasst und bei Überdeckung das betreffende temporäre Objekt aus der validen Klasse in die invalide Klasse verschoben wird.

4. Vorrichtung zur Erfassung von Stammdaten eines Objekts (12) zur Durchführung eines Verfahrens nach einem der Ansprüche 1 bis 3, aufweisend
- eine Waage (14),
- eine Kamera (16) zur Aufnahme eines Bildes des Objekts (12),
- eine Auswerteeinheit (18) mit einer Volumenbestimmungseinheit (20) zur Bestimmung des Volumens des Objekts (12),
- eine Startereinheit (26), die selbsttätig einen Startzeitpunkt ermittelt zur Aufnahme der das Objektvolumen betreffenden Stammdaten, wenn das Objekt (12) auf der Waage (14) abgelegt ist,
- einen Speicher (28) zur Speicherung der aufgenommenen Stammdaten,
- eine Ausgabeeinheit (22) zur Ausgabe der Stammdaten,
**dadurch gekennzeichnet,**
- **dass** die Startereinheit (26) ausgebildet ist, den Startzeitpunkt aus dem aufgenommenen Bild der Kamera (16) zu ermitteln und die Startereinheit (26) dazu eine Bildauswertungseinheit (30) aufweist und die Bildauswertungseinheit (30) ausgebildet ist, eine Objektklassifizierung durchzuführen, mit der neben dem Objekt (12) auch Fremdobjekte (50) als zulässige oder unzulässige Fremdobjekte (50) klassifiziert werden.

5. Vorrichtung nach Anspruch 4, **dadurch gekennzeichnet, dass** die Startereinheit ausgebildet ist, den Startzeitpunkt möglichst früh auszugeben und bereits dann ausgibt, wenn ein zulässiges Fremdobjekt noch im Bildbereich befindlich ist.

6. Vorrichtung nach einem der vorhergehenden Ansprüche 4 oder 5, **dadurch gekennzeichnet, dass** die Kamera ausgebildet ist, ein Tiefenwerte aufweisendes Bild zu erzeugen.

7. Vorrichtung nach Anspruch 6, **dadurch gekennzeichnet, dass** die Bildauswertungseinheit ausgebildet ist, die Objektklassifizierung unter Berücksichtigung der Tiefenwerte durchzuführen.

8. Vorrichtung nach einem der vorhergehenden Ansprüche 4 bis 7, **dadurch gekennzeichnet, dass** die Auswerteeinheit ausgebildet ist, eine Meldung auszugeben, wenn kein Startzeitpunkt innerhalb einer Wartezeit ermittelt werden konnte.

## Claims

1. Method for acquiring master data of an object (12) comprising the steps:
- weighing the object on a scale (14),
- determining a starting point in time for recording the master data by:
- taking a depth value image of the object (12) with a camera (16),
- determining contiguous regions in the image that then form first temporary objects,
- classifying the first temporary objects into a valid and an invalid class, wherein all first temporary objects that lie within the image without touching the image edge (33) are sorted into the valid class and first temporary objects with edge contact are sorted into the invalid class,
- analyzing the first temporary objects in the invalid class by evaluating the depth values and forming new subregions with depth values beyond a depth value threshold,
- scanning the subregions for contiguous areas, where these contiguous areas form second temporary objects,
- moving the second temporary objects to the valid class if they do not touch the image edge (33),
- finding overlaps of the temporary objects in the valid class with the temporary objects remaining in the invalid class, where the overlap must exceed an overlap threshold,
- in case of overlap, moving the temporary objects in question from the valid class to the invalid class,
- defining the temporary objects in the valid class as the object to be measured,
- if no object is in the valid class, output an error signal, otherwise
- after the starting point in time determined in this way, starting the volume detection of the object (12),
- recording the master data,
- saving the recorded master data,
- outputting of the master data.

2. Method according to claim 1, **characterized in that** depth value histograms are recorded and evaluated for the evaluation of the depth values and formation of new subregions with depth values beyond a depth value threshold.

3. Method according to one of the preceding claims 1 or 2, **characterized in that**, in the presence of regions with missing depth values, the search for overlaps also comprises the search for overlaps of the temporary objects in the valid class with the regions with missing depth values and, in the case of overlaps, the relevant temporary object is moved from the valid class to the invalid class.

4. Device for acquiring master data of an object (12) for carrying out a method according to one of claims 1 to 3, comprising
- a scale (14),
- a camera (16) for capturing an image of the object (12),
- an evaluation unit (18) with a volume determination unit (20) for determining the volume of the object (12),
- a starter unit (26) which automatically determines a starting point in time for recording the master data concerning the object volume when the object (12) is placed on the scale (14),
- a memory (28) for storing the recorded master data,
- an output unit (22) for outputting the master data,
**characterized in that**
- the starter unit (26) is designed to determine the starting point in time from the recorded image of the camera (16), and the starter unit (26) has an image evaluation unit (30) for this purpose, and the image evaluation unit (30) is designed to carry out an object classification by means of which, in addition to the object (12), extraneous objects (50) are also classified as permissible or impermissible extraneous objects (50).

5. Device according to claim 4, **characterized in that** the starter unit is designed to output the starting point in time as early as possible and already outputs it when a permissible extraneous object is still located in the image area.

6. Device according to any one of the preceding claims 4 or 5, **characterized in that** the camera is adapted to generate an image comprising depth values.

7. Device according to claim 6, **characterized in that** the image evaluation unit is designed to perform the object classification taking into account the depth values.

8. Device according to one of the preceding claims 4 to 7, **characterized in that** the evaluation unit is designed to output a message if no starting point in time could be determined within a waiting time.

## Revendications

1. Procédé de saisie de données de base d'un objet (12) comprenant les étapes suivantes :
- Déposer l'objet sur une balance (14),
- Déterminer un moment de départ pour l'enregistrement des données de base:
- Capturer d'une image de l'objet (12) présentant des valeurs de profondeur avec une caméra (16),
- Déterminer des régions contiguës dans l'image qui constituent alors des premiers objets temporaires,
- Classer les premiers objets temporaires en une classe valide et une classe invalide, dans lequel tous les premiers objets temporaires qui se trouvent à l'intérieur de l'image sans toucher le bord de l'image (33) sont classés dans la classe valide et les premiers objets temporaires qui touchent le bord sont classés dans la classe invalide,
- Analyser les premiers objets temporaires dans la classe invalide en évaluant les valeurs de profondeur et en formant de nouvelles sous-régions avec des valeurs de profondeur au-delà d'un seuil de valeur de profondeur,
- Etudier les sous-régions pour trouver des zones contiguës, dans lequel ces zones contiguës constituent des deuxièmes objets temporaires,
- Déplacer des deuxièmes objets temporaires dans la classe valide lorsqu'ils ne touchent pas le bord de l'image (33),
- Trouver de chevauchements entre les objets temporaires de la classe valide et les objets temporaires restant dans la classe invalide, dans lequel le chevauchement doit dépasser une valeur seuil de chevauchement,
- en cas de chevauchement, déplacer les objets temporaires en question de la classe valide à la classe invalide,
- Définir des objets temporaires dans la classe valide comme objet à mesurer,
- si aucun objet ne se trouve dans la classe valide, émettre un signal d'erreur, sinon
- après le moment de départ ainsi déterminé, démarrer la saisie du volume de l'objet (12),
- Enregistrement des données de base,
- Mémoriser des données de base enregistrées,
- Sortir des données de base.

2. Procédé selon la revendication 1, **caractérisé en ce que** pour l'évaluation des valeurs de profondeur et la formation de nouvelles sous-régions avec des valeurs de profondeur au-delà d'un seuil de valeur de profondeur, des histogrammes de valeurs de profondeur sont enregistrés et évalués.

3. Procédé selon l'une des revendications précédentes 1 ou 2, **caractérisé en ce que**, en présence de régions avec des valeurs de profondeur manquantes, la recherche de chevauchements comprend également la recherche de chevauchements des objets temporaires dans la classe valide avec les régions avec des valeurs de profondeur manquantes et, en cas de chevauchements, l'objet temporaire concerné est déplacé de la classe valide vers la classe invalide.

4. Dispositif de saisie de données de base d'un objet (12) pour la mise en oeuvre d'un procédé selon l'une des revendications 1 à 3, comprenant
- une balance (14),
- une caméra (16) pour prendre une image de l'objet (12),
- une unité d'évaluation (18) avec une unité de détermination du volume (20) pour déterminer le volume de l'objet (12),
- une unité de démarrage (26) qui détermine automatiquement un moment de départ pour l'enregistrement des données de base concernant le volume de l'objet lorsque l'objet (12) est déposé sur la balance (14),
- une mémoire (28) pour stocker les données de base enregistrées,
- une unité de sortie (22) pour la sortie des données de base,
**caractérisé en ce que**
- l'unité de démarrage (26) est conçue pour déterminer le moment de départ à partir de l'image enregistrée de la caméra (16), et l'unité de démarrage (26) comporte à cet effet une unité d'évaluation d'image (30), et l'unité d'évaluation d'image (30) est conçue pour effectuer une classification d'objet avec laquelle, outre l'objet (12), des objets étrangers (50) sont également classés comme objets étrangers autorisés ou non autorisés (50).

5. Dispositif selon la revendication 4, caractérisé en ce fait que l'unité de démarrage est conçue pour émettre le moment de départ le plus tôt possible et l'émet déjà lorsqu'un objet étranger autorisé se trouve encore dans la zone d'image.

6. Dispositif selon l'une des revendications précédentes 4 ou 5, **caractérisé en ce que** la caméra est conçue pour générer une image comprenant des valeurs de profondeur.

7. Dispositif selon la revendication 6, **caractérisé en ce que** l'unité d'évaluation d'image est conçue pour effectuer la classification des objets en tenant compte des valeurs de profondeur.

8. Dispositif selon l'une des revendications précédentes 4 à 7, **caractérisé en ce que** l'unité d'évaluation est conçue pour émettre un message si aucun moment de départ n'a pu être déterminé dans un temps d'attente.
